# EUROPEAN PATENT APPLICATION

(11) **EP 3 505 395 A1**
(43) Date of publication of application: **03.07.2019**
(21) Application number: 18198541.7
(22) Date of filing: 04.10.2018
(51) Int. Cl.: B60P 3/22, B65D 90/52

(54) **INNOVATION IN TANK TRAILER WAVE BREAKERS**

(30) Priority: 29.12.2017 TR 201722763
(71) Applicant: Tirsan Treyler Sanayi Ve Ticaret Anonim Sirketi, 54580 Sakarya (TR)
(72) Inventor: YÜKSEL, SUAT, Sakarya (TR); YESÍLBAG , OSMAN, Sakarya (TR)
(74) Representative: Yamankaradeniz, Kemal

(57) **Abstract**

The innovation is a wave breaker (10) consisting of at least one pad placed between the main body (12, 22) and the tank wall, and at least one shaft (14, 24) providing rigidity. The purpose of the wave breaker is to prevent the sloshing of the liquids in trailer tanks as required by the safety rules of transporting non-hazardous materials, food and dangerous materials such as fuel oil, bitumen, and chemicals described in ADR directive. The wave breaker features a lightweight structure, facilitates passing between sections and tank cleaning. The wave breaker contains at least one reinforcement profile (23) to eliminate the weakness of the edges of the middle section caused by the forces applied to it.

## Description

### Technical

The innovation deals with the wave breaking structures used inside the tank trailers for transporting non-hazardous liquids, liquid foods, and dangerous liquids specified by the ADRI directive, such as fuel-oil, bitumen, and chemicals.

The innovation involves a wave breaker structure that reduces the number of the hatches above the tank and restrains liquid sloshing.

### The known state of the technique

The ADR directive regulates the safe transportation of dangerous materials on land routes without threatening the human health and the environment.

The directive also describes the responsibilities, liabilities and the working conditions of the senders, receivers, fillers, loaders, dischargers, packagers, transporters, and drivers and operators of all types of vehicles carrying dangerous materials. We will refer to the documents and certificates obtained under this directive as ADR documents.

During the transport, sloshing occurs on the surface of the liquids due to inclined roads and possible bumps. The sloshing puts pressure on the side walls and the ceiling of the tank. When these pressuring forces are greater than the truck's traction ability, they may roll the truck over.

The tank trailers are equipped with wave breakers to reduce these pressuring forces and prevent rollovers. Wave breakers augment the surface area, and they decrease the pressure.
¹ European Agreement Concerning the International Carriages of Dangerous Goods by Road

Current wave breakers are concave/convex structures, twisted on three axes. These curved structures have circular or elliptical empty areas on their center or near center, creating manholes. These wave breakers are not ergonomic, and they make human passage difficult.

Moreover, each wave breaker section bears a hatch on the roof of the tank. The extra components used to build these hatches make the tank heavier and cost extra money.

The tanks must be suitable for human entrance to make cleaning and maintenance possible. With the present technique, it's either very difficult or impossible to pass from one section to another, so each wave breaker section has to have a ceiling hatch. Our innovation features ergonomic passages between the sections separated by the wave breaker, through which a person could easily walk. This facilitates passing from one partition to another, making it possible to reduce the number of hatches and save on time and manpower needed for cleaning and maintenance.

To summarize, in the light of the above discussion, wave breaker design used in tank trucks need innovation and improvement.

### The purpose of the innovation

This innovation concerning the wave breakers in tank trailers meets the requirements explained above, eliminates the disadvantages of the current design and provides some additional advantages.

The primary purpose of the innovation is to design an ergonomic wave breaker structure that allows easy passage from one wave breaker section to the other in tanks.

The purpose of the innovation is to design a wave breaker structure that reduces the number of hatches.

Another purpose of the innovation is to scale down costs by reducing the number of hatches.

One purpose of the innovation is to facilitate human passage between the sections separated by the wave breakers.

Another purpose of the innovation is to reduce the weight of the tank by reducing the number of hatches.

One purpose of the innovation is to increase the carrying capacity of the tank by reducing its weight.

To achieve the purposes stated above, the structure in question requires at least one wave breaker body, at least one reinforcement profile with an open-ended curvature or a circular cross-section attached to the edge of the body, at least one shaft connected to the tips of the reinforcement profiles and at least one wave breaker pad placed between the wave breaker's main body and the tank wall to absorb the forces applied by the liquid on the tank walls.

### Brief Explanations of the Figures

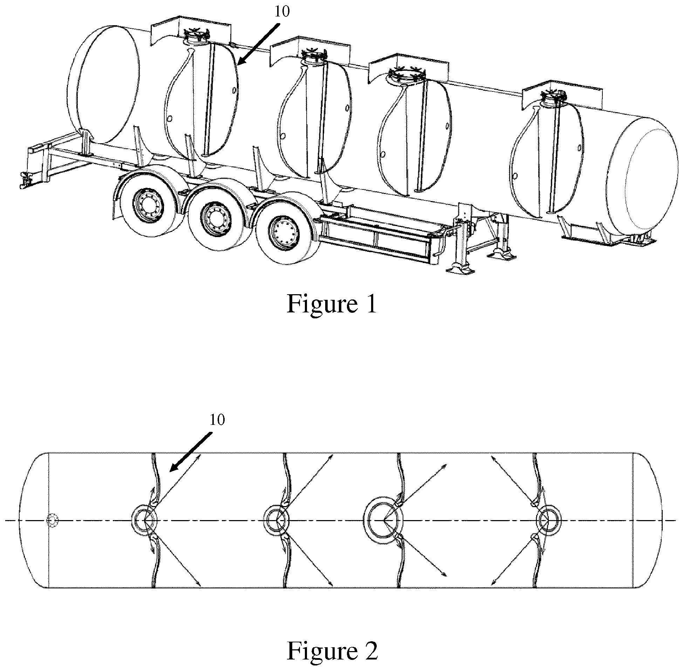

Figure 1 shows the general view of the wave breaker structure inside the tank.
Figure 2 shows the cross-section view of the wave breaker structure from above

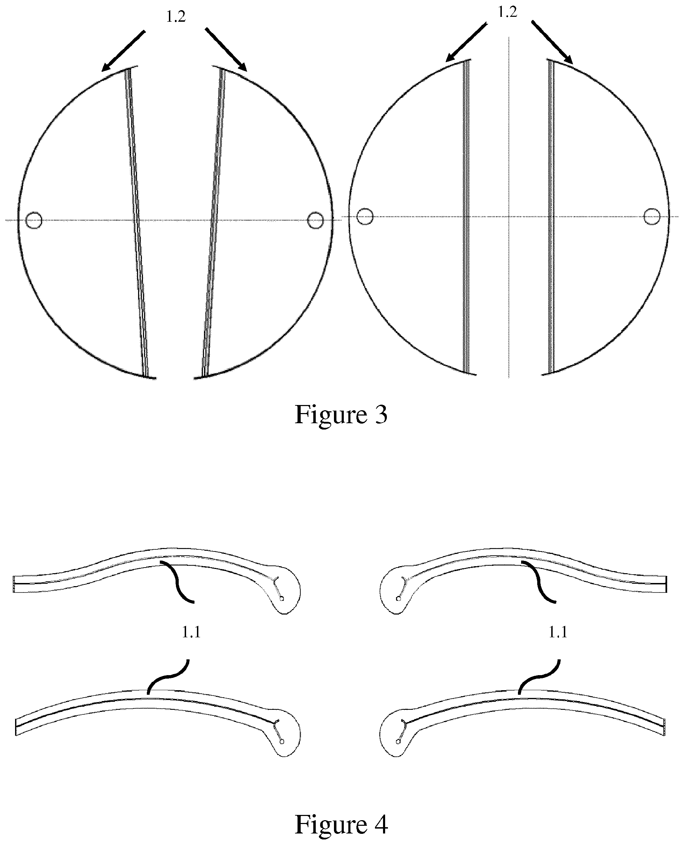

Figure 3 shows the cross-section view of the preferred (first choice) structure of the wave breaker.
Figure 4 shows the cross-section view of the curved sections of the preferred (first choice) structure of the wave breaker.

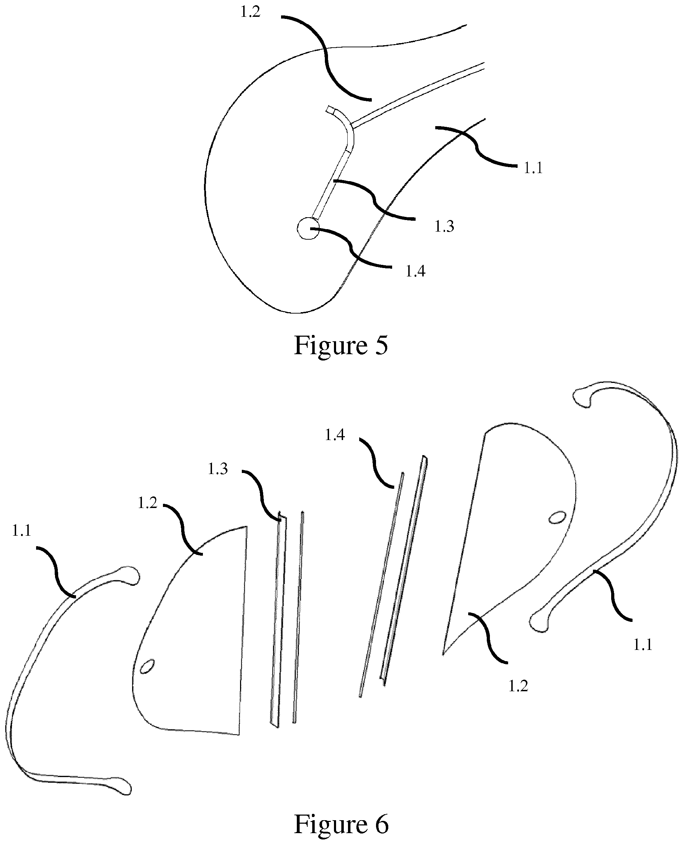

Figure 5 shows the detailed view of the preferred (first choice) structure of the wave breaker.
Figure 6 shows the general view of the preferred (first choice) structure of the wave breaker.

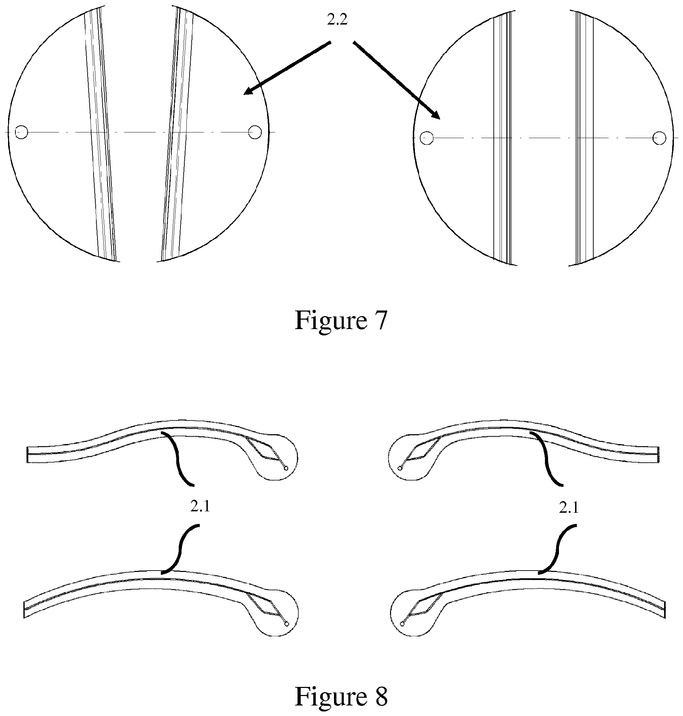

Figure 7 shows the cross-section view of the optional (second alternative) structure of the wave breaker.
Figure 8 shows the cross-section view of the curved sections of the optional (second alternative) structure of the wave breaker.

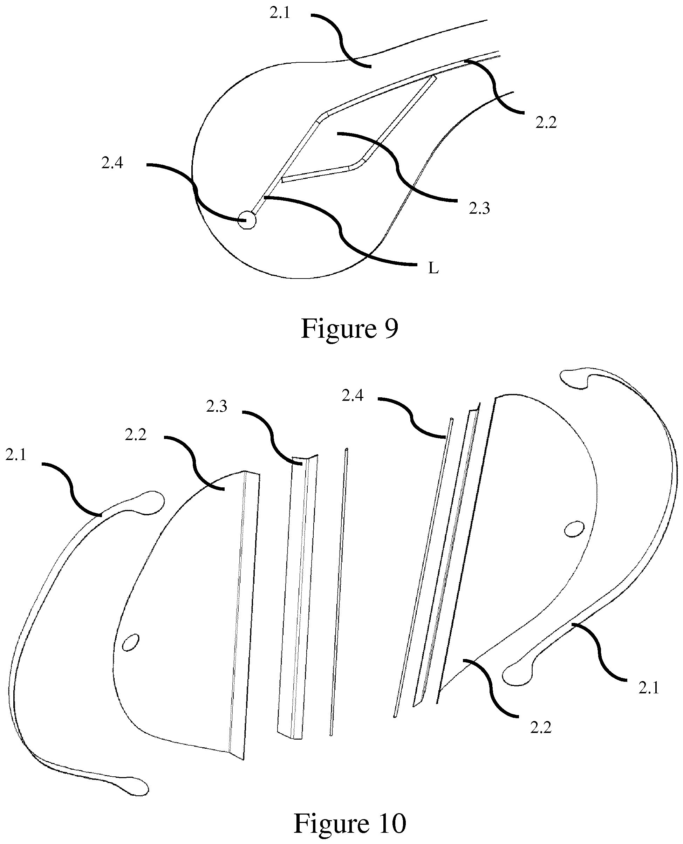

Figure 9 shows the detailed view of the optional (second alternative) structure of the wave breaker.
Figure 10 shows the general view of the optional (second alternative) structure of the wave breaker.

### Reference List

- 10: Wave Breaker
- 11: Pad
- 12: Body
- 13: Edge reinforcement profile
- 14: Shaft
- 21: Pad
- 22: Body
- 23: Frontal reinforcement profile
- 24: Shaft

### The Detailed Explanation of the Innovation

During the transport, sloshing occurs on the surface of the liquids due to inclined roads and possible bumps. The sloshing puts pressure on the side walls and the ceiling of the tank. When these pressuring powers are greater than the truck's traction ability, they may roll the truck over.

To reduce these pressuring powers and prevent rollovers, the tanks are equipped with wave breakers. Wave breakers augment the surface area and reduce the pressure.

The wave breaking structure (10) in question requires at least one wave breaker body (12, 22) to facilitate the flow of the liquid and the cleaning of the tank, at least one reinforcement profile with an open-ended curvature or a circular cross-section (13, 23) attached to the edge of the main body, at least one shaft (14, 24) connected to the tips of the reinforcement profiles and at least one wave breaker pad (11, 21) placed between the main wave breaker body and the tank wall to absorb the forces applied by the liquid on the tank walls.

The wave breaker (10) in question has two optional structures. The preferred (first choice) structure features a main body (12) that is curved in opposite directions on two different radiuses (R) or a single radius (R) to facilitate the flow of the liquid, the inside-cleaning of the tank and the cleaning of wave breaker (10).

The reinforcement profile (13) in question is welded to the edge of the main body (12). The reinforcement profile either has an open-ended curvature or a half-circular cross-section. This gives the wave breaker a rigid structure and makes it easier to clean.

The pad (11) in question absorbs the forces applied to the tank walls by the sloshing liquid and prevents the truck from rolling over. The pad (11) is welded between the body (12) and the tank wall.

The shaft (14) in question is welded to the tip of the reinforcement profile. The shaft's (14) purpose is to provide the wave breaker with rigidity and ease of cleaning.

The wave breaker (10) in question is structured in a way to permit passage on foot. This reduces the number of hatches and facilitates the passage between the sections of the wave breaker (10) The optional (second alternative) structure of wave breaker in question (10) features a main body (22) that is curved in opposite directions on two different radiuses (R) or a single radius (R) to facilitate the flow of the liquid, the inside-cleaning of the tank and cleaning of the wave breaker (10). It also features an inward-curve on the edges.

The reinforcement profile (23) in question either has a curvature or a half-circular cross-section. The main body (22) is welded to the reinforcement profile inward from the edge with a distance of (L). This allows the wave breaker (10) to have closed edges. This gives the wave breaker a rigid form and makes it easier to clean.

The pad (21) in question is welded between the main body (22) and the tank wall to absorb the forces applied to the tank wall.

The shaft (24) in question is welded to the curved section of the main body (22). The shaft's (14) purpose is to provide the wave breaker with rigidity and ease of cleaning.

Constructing the optional (second alternative) structure of the wave breaker (10) in question in tanks eliminates the necessity to build a hatch for each section and allows passage between the adjacent sections by foot.

## Claims

1. The innovation is a wave breaker (10) consisting of at least one pad placed between the main body (12, 22) and the tank wall, and at least one shaft (14, 24) providing rigidity. The purpose of the wave breaker is to prevent the sloshing of the liquids in tank trailers as required by the safety rules of transporting non-hazardous materials, food and dangerous materials described in ADR directive such as fuel-oil, bitumen, and chemicals. The wave breaker features a lightweight structure, facilitates passing between sections and tank cleaning. The wave breaker contains at least one reinforcement profile (23) to eliminate the weakness of the edges of its middle section caused by the forces applied to it.

2. According to claim 1, this is a wave breaker (10) and it features to optional structures.

3. According to claim 1, this is a wave breaker (10) and it features a main body (12, 22) that is curved either on two radiuses that cylindrically oppose each other or on a single radius.

4. According to claim 1, this is a wave breaker (10) and it features a main body (22) with inward-curving edges in its optional (second alternative) structure.

5. According to claim 1, this is a wave breaker (10) and it features a frontal reinforcement profile (23) located a distance of (L) inward from the edge of the main body (22).

6. According to claim 1, this is a wave breaker (10) and it features a frontal reinforcement profile (23) with either an open-ended curvature or a half-circular cross-section located on the edge of the body (22).

7. According to any of the previous claims, this is a wave breaker (10) and it eliminates the need to put a hatch for each section separated by the wave breaker (10).

8. According to any of the previous claims, this is a wave breaker (10) and the mentioned parts are connected by welding them together.

9. According to any of the previous claims, this is a wave breaker (10) and it features an increased carrying capacity due to the reduction in tank's weight achieved by decreasing the number of hatches.

10. According to any of the previous claims, this is a wave breaker (10) and it features spaces that enable easy human passage between the sections separated by the wave breaker.
